# EUROPEAN PATENT APPLICATION

(11) **EP 1 375 070 A1**
(43) Date of publication of application: **02.01.2004**
(21) Application number: 02254445.6
(22) Date of filing: 25.06.2002
(51) Int. Cl.: B25B 13/46, B29C 45/14

(54) **Ratchet wrench comprising a cover plate with integral seal**

(71) Applicant: Facom UK Limited, Cannock, Staffordshire WS11 3JR (GB)
(72) Inventor: Bellamy, Ian, Wednesfield, WV11 1DG (GB)
(74) Representative: Trueman, Lucy Petra

(57) **Abstract**

The present invention provides a ratchet driven tool including a ratchet mechanism and an associated tool drive wherein the ratchet mechanism is sealed from the environment by a plate having an aperture therein to receive the tool drive. The plate is provided with an integral compressible seal around at least one of the back plate and the aperture.

## Description

The present invention relates to ratchet driven tools, such as ratchet wrenches, and more particularly reversible ratchet wrenches, provided with sealing means to reduce the ingress of dirt, grit and other undesired particles into the ratchet mechanism.

Ratchet wrenches of various types are known in the art and generally comprise a head portion, which houses a ratchet mechanism, and a handle portion. The ratchet mechanism generally includes a wheel journal and a tool drive portion extending therefrom for co-operation in use with a socket. The wheel journal co-operates, by means of corresponding toothed portions, with a pawl also housed in the head portion of the wrench. The co-operation of the pawl and the wheel journal gives rise to the ratchet action of the wrench. In a reversible ratchet wrench the pawl also co-operates with a change lever to allow the position of the pawl to be altered and, as a result, the direction of the ratchet action of the wrench to be reversed.

To enable ratchet wrenches to work efficiently and for long periods of time the ratchet mechanism needs to be kept lubricated and free from dirt, grit and other unwanted particles. Ratchet wrenches are often used in environments such as building sites and vehicle repair garages where particles such as dirt and grit are found in large amounts. It is therefore desirable to reduce the possibility of unwanted particles entering the head portion of the ratchet wrench and the ratchet mechanism, and to prevent the escape of any lubrication medium, to prolong the life and efficiency of the ratchet wrench.

It is known in the art to provide seals around parts of ratchet wrenches. US Patent No. 2,957,377 discloses the use of an o-ring seal around the tool drive portion of a ratchet wrench and US Patent No. 4,934,220 discloses the use of annular lip seals in a ratchet wrench. However, both o-ring seals and annular lip seals are additional parts that must be manufactured or bought and inserted into the wrench during manufacture or repair. These additional parts add cost and complexity to the wrench. Furthermore both o-ring seals and annular lip seals have a low tolerance to error. Accordingly, if the seal or the portion of the wrench receiving the seal is not the correct size a complete seal may not be achieved and ingress of unwanted particles and loss of lubrication medium may occur.

Therefore, a need remains for a means to seal a ratchet wrench to reduce the ingress of unwanted particles and loss of lubrication medium whilst addressing at least some of the problems seen in prior art sealing methods.

According to a first aspect the present invention provides a ratchet driven tool including a ratchet mechanism and an associated tool drive wherein the ratchet mechanism is sealed from the environment by a plate having an aperture therein to receive the tool drive and wherein the plate is provided with an integral compressible seal around at least one of the plate and the aperture.

According to a second aspect, the present invention provides a plate for use in sealing a ratchet driven tool from the environment, the plate having an aperture therein and an integral compressible seal around at least one of the plate and the aperture.

The use of an integral seal removes the need for a separate sealing means to be obtained and inserted into the ratchet wrench and therefore minimises cost and complexity of the ratchet wrench

The use of a seal around at least one of the plate and the aperture in the plate reduces the likelihood of ingress of unwanted particles through spaces between the plate and the remainder of the ratchet driven tool. The use of a seal around the plate or the aperture in the plate also reduces the likelihood of escape of lubrication medium from the ratchet driven tool.

Preferably the or each seal is provided on a first surface of the plate so that the or each seal is compressed by contact with the remainder of the ratchet driven tool after assembly. Any seal around the aperture in the plate may be provided as an alternative, or additionally, on a second surface of the plate. Compression of a seal on the second surface of the plate arises from contact with the tool drive of the ratchet tool received by the aperture. It is also envisaged that the or each seal could be provided around an edge portion of the plate and/or an edge portion of the aperture in the plate. The edge portion is positioned between the first and second surfaces of the plate.

In a most preferred embodiment any seal around the aperture in the plate is provided in two parts; one part on the first surface of the plate and the second part on the second surface of the plate. The two parts of the seal on the first and second surfaces may be joined in one or more places through one or more further apertures in the plate. The provision of a seal in two parts around the aperture in the plate gives rise to greater sealing ability around the rotatable tool drive. The joining of the two parts of the seal through the plate gives mechanical integrity to the seal around the aperture in the plate.

A seal may be provided around either periphery of the aperture in the plate or the periphery of the plate. In a most preferred embodiment, seals are provided around both the periphery of the plate and the periphery of the aperture in the plate.

The seal is preferably formed from a suitable sealing material for example a mouldable polymer, most preferably an injection mouldable polymer such as HYTREL, registered trade mark of E. I. du-Pont de Nemours and Company.

The seal may comprise a single raised area or lip of sealing material. A single lip seal may comprise a compressible polymer material having a first shore hardness, the single lip seal may require a first compression load to achieve sealing. The seal may alternatively comprise two or more substantially parallel raised areas or lips of sealing material. A double lip seal, for example, may comprise a compressible polymer material having a second shore hardness, the double lip seal may require a second compression load to achieve sealing. The single lip seal preferably has a lower shore hardness than the double lip seal. The double lip seal preferably requires a lower compression load than the single lip seal to achieve sealing.

The plate may be made from any suitable material, for example a metal or a plastics material. Preferably the plate is made from steel.

The ratchet driven tool is preferably a ratchet wrench, most preferably a reversible ratchet wrench. The ratchet wrench preferably includes a head portion in which the ratchet mechanism is housed and a handle extending therefrom. The ratchet wrench may have any suitable shaped head portion, for example a round head portion, a pear or parking meter shaped head portion or a figure of eight shaped portion.

The or each seal of the plate is compressed on assembly of the ratchet wrench giving rise to sealing, preferably around the periphery of the plate and/or around the periphery of the aperture that receives the tool drive. The use of the plate according to the present invention reduces the ingress of unwanted particles into the ratchet mechanism and loss of lubricating medium from the ratchet mechanism.

According to a further aspect the present invention provides a method of manufacturing a plate according to the present invention comprising the steps of applying a sealing material to one or more surfaces of the plate by means of an injection moulding process to form the or each compressible seal.

There may be a need to apply a suitable surface treatment to the plate to ensure good adhesion of the sealing material.

The sealing material may be injected through apertures provided in the plate. Suitable injection moulding tools ensure the correct positioning of the or each seal on the plate and determine whether the or each seal is, for example, a single lip seal or a double lip seal.

A number of embodiments of the invention will now be described with reference to the figures in which:
**Figure 1** shows a cross section through a ratchet wrench including a plate according to one embodiment of the first aspect of the present invention;
**Figure 2** shows a plan view of the plate used in the ratchet wrench of Figure 1;
**Figure 3** shows a cross section through a ratchet wrench including a plate according to a second embodiment of the first aspect of the present invention;
**Figure 4a** shows a plan view of the plate used in the ratchet wrench of Figure 3;
**Figure 4b** shows a cross section along line A-A of Figure 4a;
**Figures 5a and 5b** show cross sections through two types of seal; and
**Figure 6** shows a plan view of a figure of eight shaped plate according to the second embodiment of the present invention.

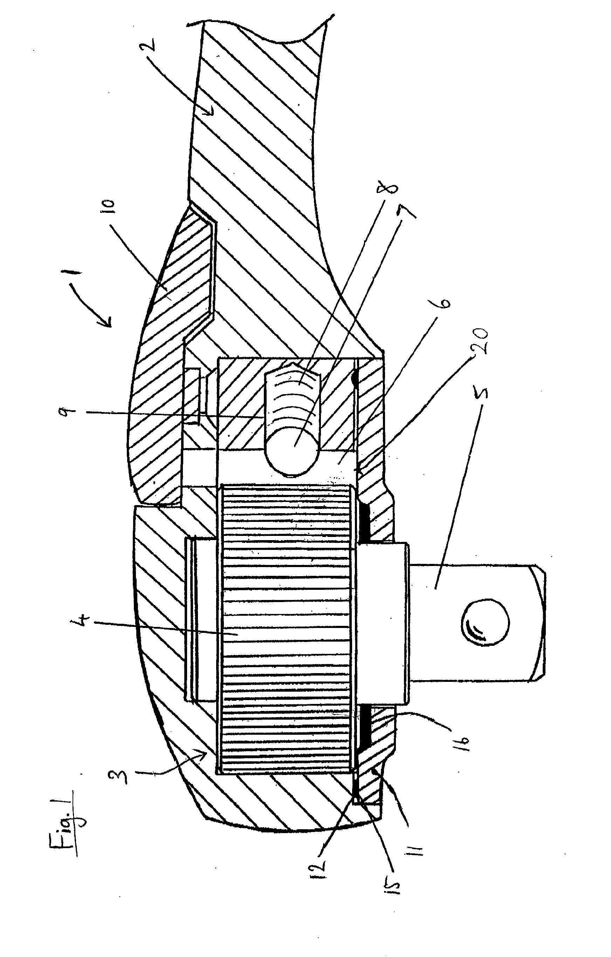

Figure 1 shows a reversible ratchet wrench 1 having a handle portion 2 extending from a pear or parking meter shaped head portion 3. The head portion 3 has a cavity 20 therein, open to the underside of the ratchet wrench, which houses the ratchet mechanism. The ratchet mechanism comprises a rotatable journal wheel 4 having a toothed outer surface and a tool drive 5 extending from the centre thereof, out of the cavity 20, for receiving a standard socket. The journal wheel 4 is, in use, held in ratcheting co-operation with a semi-circular pawl 6 by the action of a ball 7 and spring 8 arrangement housed in a bore 9 in the head portion 3 such that the ball 7 protrudes from the bore 9 and contacts the pawl 6. The pawl 6 is connected to a change lever 10 mounted on the top face of the head portion 3 and is movable, by means of the change lever 10, between a first position and a second position. Movement of the pawl 6 between the first position and the second position using the change lever 10 reverses the direction of rotation of the journal wheel 4. In use the pawl 6 prevents rotation of the journal wheel 4 within the cavity in the head portion 3 during forward ratcheting but allows rotation of the journal wheel 4 within the cavity of the head portion 3 during ratcheting back motion.

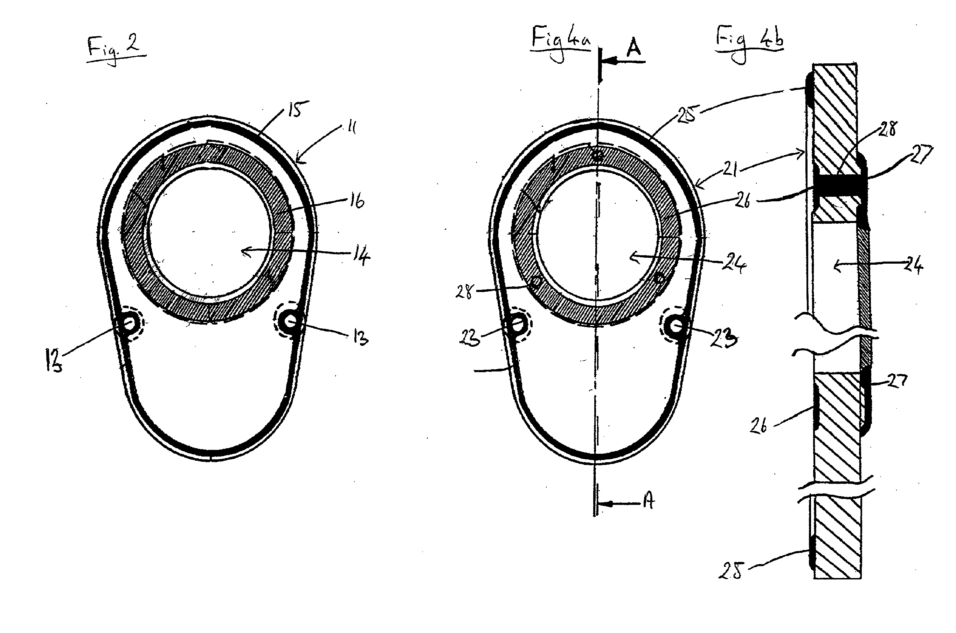

The ratchet mechanism is held in the cavity 20 in the head portion 3 of the ratchet wrench 1 by means of a plate 11 secured against a shoulder 12 extending around the open edge of the cavity of the head portion 3. The back plate is shown in detail in Figure 2.

The plate 11 is of a corresponding shape to the head portion 3 of the ratchet wrench, in this case pear or parking meter shaped. The plate 11 is manufactured from steel and provided with apertures 13 through which screws can pass to secure the plate to the shoulder 12 around the cavity 20 of the head portion of the ratchet wrench. The plate 11 includes an aperture 14 for receipt of the tool drive 5 of the ratchet wrench 1.

The plate 11 is provided with two distinct areas of sealing material, in this case a compressible mouldable polymer, HYTREL, registered trade mark of E. I. du-Pont de Nemours and Company on a first surface of the back plate. One area 15 of sealing material is provided around the periphery of the plate 11 and the screw apertures 13 and the second area 16 of sealing material is provided around the periphery of the aperture 14. In use, the first area 15 of sealing material contacts the shoulder 12 around the cavity 20 in the head portion 3 and is compressed to form a seal between the plate 11 and the shoulder 12. The second area 16 of sealing material is compressed and forms a seal between the plate 11 and the journal wheel 4.

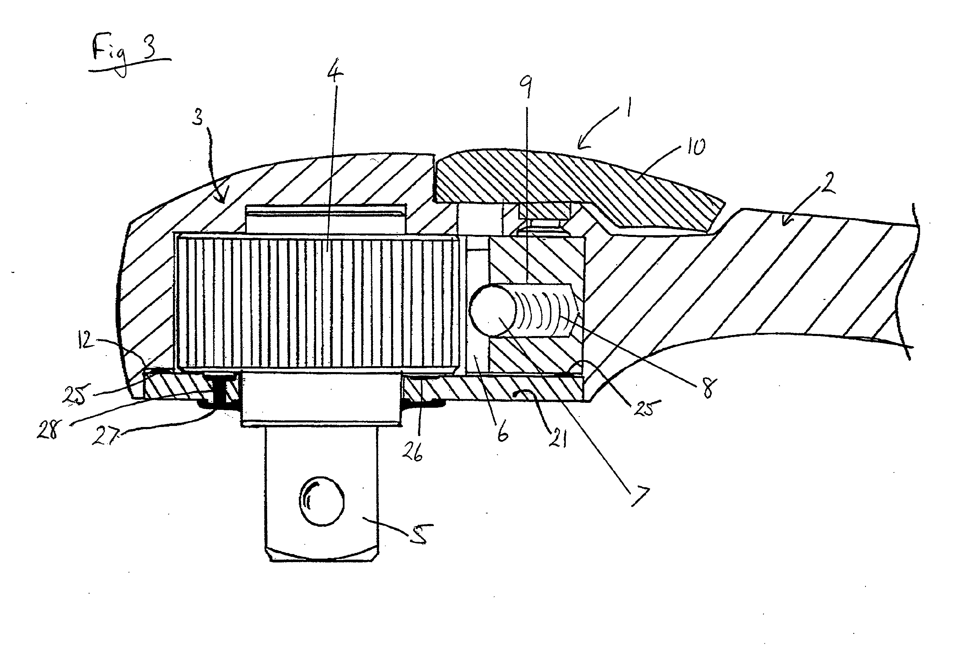

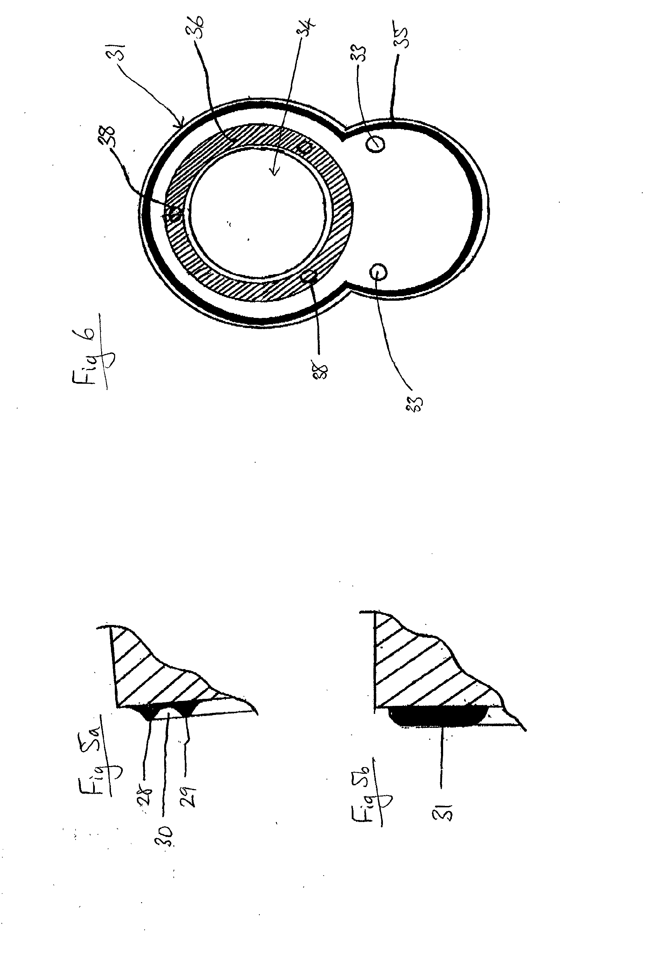

Figures 3 shows a ratchet wrench as in figure 1 and like reference numerals denote like parts. The plate 21 of the ratchet wrench 1 shown in Figures 3, 4a and 4b is pear or parking meter shaped with an aperture 24 for receipt of the tool drive 5 and apertures 23 for receipt of screws for securing the plate 21 to the head portion 3 of the ratchet wrench 1. The plate 21 is provided with a first area 25 of sealing material around the periphery of the plate 21 and a second area 26 of sealing material around the periphery of the aperture 24. The first and second sealing areas are provided on a first surface of the plate. In addition, a further area of sealing material 27 is provided around the periphery of the aperture 24 on the opposite face of the plate to the area 26. Furthermore, the areas 26 and 27 of sealing material around the aperture 24 are joined to each other through a number of apertures 28 spaced around the main aperture 24. The joining of the areas of sealing material gives increased mechanical integrity to the sealing material around the aperture 24.

The position of the three areas 25, 26 and 27 of sealing material on the plate 21 in the second embodiment of the invention can be seen clearly in Figures 4a and 4b where like numerals denote like parts.

Figures 5a and 5b show the profile options for the sealing material. Figure 5a shows two substantially parallel raised portions of sealing material (a double lip seal profile) where the sealing material is applied so that two raised lips 28, 29 with a trough 30 therebetween are formed.

Figure 5b shows a single raised area of sealing material (a single lip seal profile) where the sealing material is applied so that a single raised lip 31 is formed.

Figure 6 shows a figure of eight shaped plate 31 of a corresponding shape to the head portion of the ratchet wrench with which it is used (not shown). The plate 31 is manufactured from steel and provided with apertures 33 through which screws can pass to secure the plate to the head portion of the ratchet wrench. The plate 31 includes an aperture 34 for receipt of the tool drive of the ratchet wrench.

The plate 31 is provided with three distinct areas of sealing material, in this case a compressible mouldable polymer, HYTREL, registered trade mark of E. I. du-Pont de Nemours and Company. One area 35 of sealing material is provided around the periphery of the plate 31 and the screw apertures 33 and the second area 36 of sealing material is provided around the periphery of the aperture 34. The first and second areas of sealing material are provided on a first surface of the plate. In addition, a further area of sealing material 37 (not shown) is provided around the periphery of the aperture 34 on the opposite face of the plate 31 to the second area 36. Furthermore, the areas 36 and 37 of sealing material around the aperture 34 are joined to each other through a number of apertures 38 spaced around the main aperture 34. The joining of the areas of sealing material gives increased mechanical integrity to the sealing material around the aperture 34.

In use, the first area 35 of sealing material is compressed to form a seal between the plate 31 and a suitable portion of the head of the ratchet wrench. The second area 36 of sealing material is compressed and forms a seal between the plate 31 and the journal wheel of the ratchet wrench. The third area of sealing material 37 is compressed against the tool drive of the ratchet.

The areas of sealing material are applied to the back plate by injection moulding techniques. The back plate is first surface treated to ensure good adhesion of the sealing material. The back plate is then inserted into a suitable mould depending on the desired position of the areas of sealing material. A mouldable polymer, HYTREL, registered trade mark of E. I. Du-Pont de Nemours and Company, is injected into the mould to form the areas of sealing material.

## Claims

1. A ratchet driven tool including a ratchet mechanism and an associated tool drive wherein the ratchet mechanism is sealed from the environment by a plate having an aperture therein to receive the tool drive and wherein the plate is provided with an integral compressible seal around at least one of the back plate and the aperture.

2. A plate for use in sealing a ratchet driven tool from the environment, the plate having an aperture therein and an integral compressible seal around at least one of the plate and the aperture.

3. An article according to claim 1 or claim 2 wherein the or each seal is provided on a first surface of the plate.

4. An article according to claim 1 or claim 2 wherein where a seal is provided around the aperture in the plate it is provided on a second surface of the plate.

5. An article according to claim 4 wherein a seal around the plate is provided on a first surface thereof.

6. An article according to any preceding claim wherein any seal around the aperture in the plate is provided in two parts; one part on a first surface of the plate and a second part on a second surface of the plate.

7. An article according to claim 6 wherein the two parts of the seal on the first and second surfaces are joined to each other in one or more places through one or more further apertures in the plate.

8. An article according to claim 1 wherein the or each seal is provided around an edge portion of the plate and/or an edge portion of the aperture in the plate, wherein the edge portion is positioned between a first and a second surface of the plate.

9. An article according to any preceding claim wherein a seal is provided around either the periphery of the aperture in the plate or the periphery of the plate.

10. An article according to any of claims 1 to 8 wherein seals are provided around both the periphery of the plate and the periphery of the aperture in the plate.

11. An article according to any preceding claim wherein the or each seal is formed from a suitable sealing material.

12. An article according to claim 11 wherein the or each seal is formed from an injection mouldable polymer.

13. An article according to claim 11 or claim 12 wherein the seal comprises a single raised area of sealing material.

14. An article according to claim 11 or claim 12 wherein the seal comprises two or more substantially parallel raised areas of sealing material.

15. A method of manufacturing a plate according to any of claims 2 or claims 3 to 14 when dependent on claim 2 comprising the steps of applying a sealing material to one or more surfaces of the plate by means of an injection moulding process to form the or each compressible seal.

16. A method according to claim 15 wherein the sealing material is injected through apertures provided in the plate.
